# EUROPEAN PATENT SPECIFICATION

(11) **EP 0 595 421 B1**
(45) Date of publication and mention of the grant of the patent: **13.12.1995**
(21) Application number: 93202988.7
(22) Date of filing: 26.10.1993
(51) Int. Cl.: B60G 21/055, B60G 7/02

(54) **Rear suspension**
Hinterradaufhängung
Suspension arrière

(30) Priority: 29.10.1992 NL 9201876
(43) Date of publication of application: 04.05.1994
(73) Proprietor: Netherlands Car B.V., NL-6121 RD Born (NL)
(72) Inventor: Fun, Johannes Kryn, NL-5731 JV Mierlo (NL)
(74) Representative: Timmermans, Anthonius C.Th., Ir.

(56) References cited:
- EP-A- 0 407 303
- WO-A-87/01078
- DE-A- 1 530 595
- DE-A- 3 001 530
- DE-A- 3 133 312
- FR-A- 2 564 785
- FR-A- 2 581 594
- SE-B- 457 866
- PATENT ABSTRACTS OF JAPAN vol. 7, no. 257 (M-256)(1402) 16 November 1983 & JP-A-58 139 811 (TOYO KOGYO) 19 August 1983
- ATZ AUTOMOBILTECHNISCHE ZEITSCHRIFT vol. 76, no. 10 , October 1974 pages 316 - 321 BECK ETAL 'Die Koppellenkerachse für frontgetriebene Personenwagen- eine Entwicklung von Audi NSU'
- PATENT ABSTRACTS OF JAPAN vol. 7, no. 246 (M-253)(1391) 2 November 1983 & JP-A-58 133 908 (TOYO KOGYO) 9 August 1983

## Description

The current invention pertains to a rear suspension equipped with wheel carrier arms, which wheel carrier arms are coupled to each other by way of a torsion-weak cross-beam having high bending stiffness, which cross-beam runs largely parallel to the wheel-axles and has ends, which ends are each connected to the chassis of a vehicle by means of a resilient steering arm.

Such a rear suspension is known from SE-457866. The cross-beam is hereby constructed from two mutually coupled portions and an end of each of the portions is connected to the chassis by means of a steering arm. The steering arms are thereby enclosed by rubber elements in such a manner that a rotation-stiffness in the vertical sense, which rotation-stiffness is necessary for the absorption of the transverse forces which mainly occur during the engagement of corners, is provided.

With this, the problem of inclination towards oversteer during the engagement of a corner as a result of the transverse forces which are then experienced is addressed, in a way, however, which is relatively complicated and expensive from both a development and production point of view.

Other known solutions to the problem on hand, as known from the article "Die neue Hinterachs-Generation im VW Passat", published in ATZ Automobiltechnische Zeitschrift 83 (1981) 1, page's 3-7, employ a track-correcting bearing, which track-correcting bearing contains a couple of asymmetrically composed wedge-shaped rubber tubes, at the location of each connection between a steering arm and the chassis. This known solution is, however, also complicated and expensive.

The aim of the current invention is to use another principle, in order to compensate for the inclination towards oversteer during the engagement of a corner, in an inexpensive and simple manner.

To that end, the rear suspension according to the invention is characterised in that the steering arm is embodied as a leaf spring made from sheet steel, or otherwise is made from carbon/glass-fibre reinforced composite material with elastic properties, and that each steering arm has ends, whereby one end is rigidly connected to the cross-beam, while the other end is equipped with a rubber bearing element, which rubber bearing element is fixed to the chassis and whereby the bending plane of the spring is substantially horizontal.

The advantage of this resilient steering arm is that the steering arm is in principle capable of transferring forces in a flexible manner to the chassis in all desired directions. The new principle realised therewith makes use of the advantages of the well-known delta-link principle, whereby the oversteer problem is combated by the creation of, in addition to a first movement-pole of the suspension, which first movement-pole lies forward of the virtual axle between the wheels, a second movement-pole which rightly lies behind this axle, with which second movement-pole a rotation is achieved which compensates for the oversteer. The advantage is that in the case of an in general equal length of the steering arms the relation between the bending and the maximum tension arising in the steering arms is optimal.

In a simple embodiment according to the invention, the rear suspension has a steering arm which is bent, whereby in this manner, forces are absorbed elastically through the steering arm in the bending-plane.

In a further preferential embodiment of the rear suspension according to the invention, the rubber bearing element has such a low rotation stiffness that the respective steering arms act as unilaterally clamped beams with one free end.

The advantage of this preferential embodiment is that in the case of an in general equal length of the steering arms the relation between the bending and the maximum tension arising in the steering arms is optimal.

In a further preferential embodiment, the rear suspension according to the invention is characterised in that the axis of rotation of the rubber bearing element in a fitted state runs substantially vertical.

The advantage hereof is that, in principle, the affixation of the rubber bearing element to the chassis can occur in a simple manner, for example with the aid of a bolt.

Furthermore, it is an advantage that, given the vertical axis of rotation of the rubber bearing element, the rotation of the bearing element during the engagement of a corner occurs in substantially the same direction as the direction of mobility of the resilient steering arm. An interaction and interchange ability between the elastic properties of the steering arms and the stiffness of the rubber of the bearing element is a result thereof, whereby a greater additional freedom is provided in the choice of the stiffness of the resilient steering arms and the rubber bearing elements.

Yet a further preferential embodiment is characterised in that the aforementioned other end of the respective steering arms is formed to a housing for the rubber bearing element, whereby namely in the case of a vertical orientation of the aforementioned affixation, the end of a steering arm formed in this manner can be simply employed as a housing for the rubber bearing element, whereby an extremely simple construction of the oversteer-compensating elements is acquired.

The invention will be further elucidated on the basis of the accompanying drawing, wherein consistent reference numbers are used for the indication of one and the same element. The subjects of the figures are as follows:
figure 1 is a schematic depiction of the basic principle which is applied in the rear suspension according to the invention;
figure 2 is a depiction of a partially-shown practical preferential embodiment of the rear suspension according to the invention; and
figure 3 is a plan view of the rear suspension of figure 2.

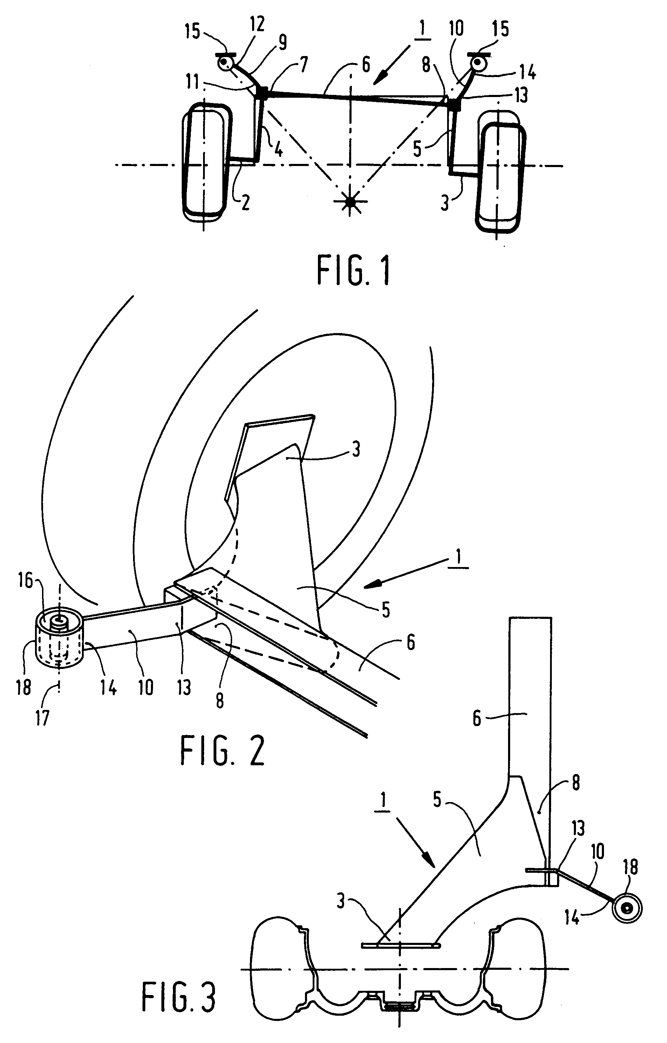

Figure 1 shows the principle of a rear suspension 1, which in addition to wheels fixed to wheel-axles 2 and 3, contains wheel carrier arms 4, 5 affixed to the wheel-axles 2, 3, between which wheel carrier arms 4, 5 a cross-beam 6 is fixed, which cross-beam 6 runs largely parallel to the wheel carrier axles 2, 3. The cross-beam 6 has ends 7 and 8 which are coupled to resilient steering arms 9 and 10, respectively. Steering arm 9 has ends 11 and 12 and steering arm 10 has ends 13 and 14, whereby the respective ends 12 and 14 are coupled with the schematically-depicted chassis 15.

A practical preferential embodiment of the rear suspension 1 is schematically depicted in figures 2 and 3. In this preferential embodiment the steering arm is implemented elastically as a leaf spring. If desired, the steering arm 9, 10 can also have a curved form. The one end 13 of the steering arm 10 depicted namely in figure 2 is rigidly connected to the end 8 of the cross-beam 6, while the other end 14 is equipped with a schematically-depicted rubber bearing element 16, which rubber bearing element 16 is fixed to the - not depicted in this figure - chassis. The rubber bearing element 16 preferably has such a low rotation stiffness that the steering arm 10 acts as a unilaterally clamped beam with a free end 13, whereby the relationship between bending and the highest tension in the steering arm in question is optimal namely in the vertical orientation of the axle 17 shown in figure 3.

The central axle 17 of the thereby rotation-symmetric rubber bearing element 16 runs preferably vertically, so that in addition to a simple affixation to the chassis the end 14 in question can contain an eye which serves as a housing 18 for the bearing element 16.

## Claims

1. Rear suspension equipped with wheel carrier arms (4, 5), which wheel carrier arms are coupled to each other via a torsion-weak cross-beam (6) having a high bending stiffness, which cross-beam runs largely parallel to the wheel-axles (2, 3) and has ends (7, 8), which ends are each connected to the chassis (15) of a vehicle by means of a resilient steering arm (9, 10), characterised in that the steering arm (9, 10) is embodied as a leaf spring made from sheet steel, or otherwise is made from carbon/glass-fibre reinforced composite material with elastic properties, and each steering arm (9, 10) has ends (11, 12, 13, 14), whereby one end (11, 13) is rigidly connected to the cross-beam (6), while the other end (12, 14) is equipped with a rubber bearing element (16), which rubber bearing element is fixed to the chassis (15) and the bending plane of the spring is substantially horizontal.

2. Rear suspension according to claim 1, characterised in that the steering arm (9, 10) is bent.

3. Rear suspension according to claim 1 or 2, characterised in that the rubber bearing element (16) has such a low rotation stiffness that the respective steering arms (9, 10) act as unilaterally clamped beams with one free end.

4. Rear suspension according to claim 3, characterised in that the axis of rotation (17) of the rubber bearing element (16) in a fitted state runs substantially vertical.

5. Rear suspension according to claim 4, characterised in that the aforementioned other end (12, 14) of the respective steering arms (9, 10) is formed to a housing (18) for the rubber bearing element (16).

## Patentansprüche

1. Hinterradaufhängung mit Radträgerarmen (4,5), welche Radträgerarmen mit einander gekuppelt sind mittels eines torsionsschwachen Querträgers (6), welcher eine hohe Biegungssteifigkeit besitzt, wobei der Querträger größtenteils parallel an den Radachsen verläuft und ein Ende (7,8) besitzt, welche Enden beide mit dem Chassis eines Fahrzeuges verbunden sind mittels eines flexibelen Lenkarmes, dadurch gekenzeichnet, daß der Lenkarm (9,10) als ein Blattfeder angefertigt von Stahlblech oder von ein Kohlenstoff/Glassfaser ausgebildet ist verstärktes Compositmaterial mit federnden Eigenschaften, und daß jeder Lenkarm (9,10) zwei Enden (11,12,13,14) hat, wobei ein Ende (11,13) starr mit dem Querträger (6) verbunden ist und das andere Ende (12,14) mit einem gummi Lagerelement (16) versehen ist, das am Chassis (15) befestigt ist wobei die Biegebene der Feder nahezu horizontal ist.

2. Hinterradaufhängung gemäß Anspruch 1, dadurch gekenzeichnet, daß der Lenkarm (9,10) gekrümmt ist.

3. Hinterradaufhängung gemäß Anspruch 1 oder 2, dadurch gekenzeichnet, daß das gummi Lagerelement (16) eine derartig niedrige Rotationssteifigkeit besitzt, daß die einschlägigen Lenkarmen (9,10) als einseitig eingeklemmten Balken mit einem freien Ende functionieren.

4. Hinterradaufhängung gemäß Anspruch 3, dadurch gekenzeichnet, daß die Rotationsachse (17) des gummi Lagerelementes (16) in zusammengebauter Zustand nahezu senkrecht verläuft.

5. Hinterradaufhängung gemäß Anspruch 4, dadurch gekenzeichnet, daß das bevor erwähnte andere Ende (12,14) der betreffenden Lenkarmen (9,10) als ein Haus (18) für das gummi Lagerelement (16) ausgebildet ist.

## Revendications

1. Suspension arrière équipé de bras porteurs de roue (4, 5), lesquels bras porteurs de roue sont accouplés l'un à l'autre par une poutre transversale (6) faible en torsion et ayant une haute rigidité de flexion, laquelle poutre transversale est sensiblement parallèle aux essieux de roues (2, 3) et a des extrémités (7, 8), lesquelles extrémités sont attachées au chassis (15) d'un véhicule au moyen d'un bras de direction résilient (9, 10), caractérisée en ce que le bras de direction (9, 10) est réalisé comme un ressort à lames fait d'acier en feuilles, ou autrement d'un matériau renforcé composé carbone/fibre de verre avec des propriétés élastiques, et en ce que chaque bras de direction (9, 10) a des extrémités (11, 12, 13, 14), une extrémité (11, 13) étant connectée rigidement avec la poutre transversale (6), alors que l'autre extrémité (12, 14) est munie d'un élément porteur en caoutchouc (16), lequel élément porteur en caoutchouc est attaché au chassis (15), et le plan de flexion du ressort est essentiellement horizontal.

2. Suspension arrière selon la revendication 1, caractérisée en ce que le bras de direction (9, 10) est courbé.

3. Suspension arrière selon la revendication 1 ou 2, caractérisée en ce que l'élément porteur en caoutchouc (16) a une rigidité de rotation tellement basse que les bras de direction respectifs (9, 10) agissent comme des poutres unilatéralement pendus avec une extrémité libre.

4. Suspension arrière selon la revendication 3, caractérisée en ce que l'axe de rotation (17) de l'élément porteur en caoutchouc (16) dans un état enchassé est essentiellement vertical.

5. Suspension arrière selon la revendication 4, caractérisée en ce que ladite autre extrémité (12, 14) des bras de direction (9, 10) respectifs a la forme d'une boîte (18) pour l'élément porteur en caoutchouc (16).
